# EUROPEAN PATENT APPLICATION

(11) **EP 3 726 077 A1**
(43) Date of publication of application: **21.10.2020**
(21) Application number: 20163059.7
(22) Date of filing: 13.03.2020
(51) Int. Cl.: F16C 17/03, F04D 13/06, F04D 1/06, F04D 29/047

(54) **VERTICAL PUMP AND METHOD FOR RETROFITTING A VERTICAL PUMP**

(71) Applicant: Sulzer Management AG, 8401 Winterthur (CH)
(72) Inventor: De Raeve, Karel, 8400 Winterthur (CH)
(74) Representative: Intellectual Property Services GmbH

(57) **Abstract**

A vertical pump for conveying a process fluid is proposed, comprising a pump housing (2) with a pump inlet (21) and a pump outlet (22), a rotor (3) arranged in the pump housing (2) and configured for rotating about an axial direction (A), and at least one radial bearing (53, 54) for supporting the rotor (3) with respect to a radial direction perpendicular to the axial direction (A), wherein the rotor (3) comprises a pump shaft (5) extending in the direction of gravity, and at least one impeller (31, 32, 33) fixedly mounted on the pump shaft (5) for conveying the process fluid from the pump inlet (21) to the pump outlet (22), and wherein the radial bearing (53, 54) is configured as a tilting pad journal bearing comprising a support ring (56) and a plurality of pads (57) for supporting the pump shaft (5) by means of a lubricant, wherein each pad (57) comprises a front side (571) facing the pump shaft (5), a back side (572) facing the support ring (56), and a channel (573) for a fluid communication between the front side (571) and the back side (572), wherein, during operation, each pad (57) is supported by the hydrostatic pressure of the lubricant squeezed between the back side (572) of the pad (57) and the support ring (56). Furthermore, a method for retrofitting a vertical pump is proposed.

## Description

The invention relates to a vertical pump for conveying a process fluid and to a method for retrofitting a vertical pump in accordance with the preamble of the independent patent claim of the particular category.

Vertical pumps are centrifugal pumps having a pump shaft extending in the direction of gravity, i.e. during operation the pump shaft rotates about a rotation axis, which is oriented vertically. Vertical pumps are used in many different industries, for example in the oil and gas processing industry, the power generation industry, the chemical industry, the clean and waste water industry. Vertical pumps may be designed as single stage pumps or as multistage pumps. Furthermore, vertical pumps can be configured as single phase pumps for conveying a single phase process fluid, such as water, or they can be configured as multiphase pumps for conveying a multiphase process fluid, which comprises a mixture of a plurality of phases, for example a liquid phase and a gaseous phase. An important example is the oil and gas processing industry where vertical multiphase pumps are used for conveying hydrocarbon fluids, for example for extracting the crude oil from the oil field or for transportation of the oil/gas through pipelines or within refineries.

Fossil fuels are usually not present in pure form in oil fields or gas fields, but as a multiphase mixture which contains liquid components, gas components and possibly also solid components. This multiphase mixture of e.g. crude oil, natural gas, chemicals, seawater and sand has to be pumped from the oil field or gas field. For such a conveying of fossil fuels, vertical multiphase pumps are used which are able to pump a liquid-gas mixture which may also contain solid components, sand for example. Nowadays, vertical multiphase pumps are known that can pump multiphase fluids with strongly varying composition. For example, during exploitation of an oil field the ratio of the gaseous phase (e.g. natural gas) and the liquid phase (e.g. crude oil) is strongly varying. The ratio of the gaseous phase in the multiphase mixture is commonly measured by the dimensionless gas volume fraction (GVF) designating the volume ratio of the gas in the multiphase process fluid. In applications in the oil and gas industry vertical pumps should be able to convey multiphase process fluids having a gas volume fraction of 0% to 100%.

In view of an efficient exploitation of oil- and gas fields there is nowadays an increasing demand for pumps that may be installed directly on the sea ground in particular down to a depth of 500 m, down to 1000 m or even down to more than 2000 m beneath the water's surface. Needless to say, that the design of such pumps is challenging, in particular because these pumps shall operate in a difficult subsea environment for a long time period with as little as possible maintenance and service work. This requires specific measurements to minimize the amount of equipment involved and to optimize the reliability of the pump.

In terms of rotor dynamics vertical pumps have a considerable drawback as compared to horizontal pumps. Horizontal pumps have a pump shaft extending perpendicular to the vertical direction, namely in horizontal direction.

In horizontal pumps the radial bearings, also referred to as journal bearings, are loaded with a well-defined load, because the gravity pulls the pump shaft with the impellers mounted to it in one direction. Thanks to this static load vector, which consists of the weight of the pump shaft and the impellers, the pump shaft has a preferred position in the bearing clearance of the radial bearing(s) and will move on the fixed locus curve in function of the rotational speed and the load magnitude. The position of the shaft on the locus curve is determined by the Sommerfeld number.

For a vertical pump, there is no force or nearly no force in the bearing plane of the radial bearings, which pulls the shaft in one specific direction. There is nearly no load generated on the radial bearings by the weight of the pump shaft and the impeller(s) and there is no defined direction of the static load. This means that the pump shaft does not have a preferred position in the bearing clearance of the radial bearing(s). Therefore, a small excitation is enough to make the pump shaft move within the bearing clearance. Thus, in a tilting pad journal bearing a small excitation is enough to push the pump shaft from one pad to another pad.

Vibration measurements on operating vertical pumps show a particular shaft movement, where the shaft is observed to be walking from pad to pad. This walking is caused by the lack of a preferred position in the bearing clearance of the radial bearing(s) and it results in a high amplitude shaft movement. This high amplitude shaft movement can even exceed the limits given by industrial norms such as the API vibration criteria. Typically such vibrations are low energy-high amplitude vibrations because it does not require a large force to excite vibrations of large amplitudes.

Not only but particularly vertical multiphase pumps are especially prone to these vibrations for a variety of reasons. A usual single phase centrifugal pump has a significant amount of internal damping due to the single phase leakage over the internal seals or gaps along the rotor of the pump, such as the impeller eye seal, the hub seal seals, wear rings, throttle bushings and the balance. The leakage flow through those seals is counteracting vibrations and is generating damping. This physical phenomenon is called the Lomakin effect. A multiphase pump has by design much less seals as a single phase pump and the Lomakin effect of a multiphase leakage flow in a seal is also significantly smaller. Therefore, a multiphase pump has relatively low internal damping and relatively high hydraulic excitations due to the erratic character of the multiphase flow.

This makes it a challenge to design a vertical multiphase pump in such a manner that it meets the vibration acceptance criteria. To address this problem, EP 3 315 803 A2 proposes to use a magnetic force generated for example by a permanent magnet to pull the shaft of a vertical pump in the radial bearing in a defined direction. The magnet is arranged laterally with respect to the shaft, so that the magnetic force has a comparable effect as the gravity in a radial bearing of a horizontal pump. This would give the shaft thus a preferred position in the bearing clearance.

Starting from this prior art it is an object of the invention to propose another vertical pump, in which the amplitude of said vibrations is considerably reduced, the vibration energy is removed, and the pump shaft has a preferred position in the radial bearing during operation of the pump. Furthermore, it is an object of the invention to propose a method for retrofitting a vertical pump, which has issues with the amplitude of vibrations, in particular the low-energy high-amplitude vibrations.

The subject matter of the invention satisfying this object is characterized by the features of the independent claims.

Thus, according to the invention, a vertical pump for conveying a process fluid is proposed, comprising a pump housing with a pump inlet and a pump outlet, a rotor arranged in the pump housing and configured for rotating about an axial direction, and at least one radial bearing for supporting the rotor with respect to a radial direction perpendicular to the axial direction, wherein the rotor comprises a pump shaft extending in the direction of gravity, and at least one impeller fixedly mounted on the pump shaft for conveying the process fluid from the pump inlet to the pump outlet, and wherein the radial bearing is configured as a tilting pad journal bearing comprising a support ring and a plurality of pads for supporting the pump shaft by means of a lubricant, wherein each pad comprises a front side facing the pump shaft, a back side facing the support ring, and a channel for a fluid communication between the front side and the back side, wherein, during operation, each pad is supported by the hydrostatic pressure of the lubricant squeezed between the back side of the pad and the support ring.

In a preferred embodiment of the vertical pump according to the invention the radial bearing is configured as a type of tilting pad journal bearing which is also called fluid pivot bearing. In a fluid pivot bearing each pad is supported on a self-generated hydrostatic lubricant film, created by tapping off a small portion of the lubricant film which is hydrodynamically generated on the front side of the pad during operation of the vertical pump. This hydrostatic support for the pad provides a cushionable movement to permit the pad to move, e.g. to pivot or to move in radial direction. The lubricant passes from the front side of the pad through the channel towards the back side of the pad.

In many embodiments the back side of the pad is provided with an elongated circumferentially extending cavity, into which the channel opens out.

Although the technology of the fluid pivot bearing is known since many decades, for example from US 4,059,318, it has never been recognized that the fluid pivot bearing provides considerable benefits in a vertical pump. One of the reasons might be, that it requires advanced rotordynamic considerations and calculation capabilities, which are able to simulate the highly non-linear bearing behavior. The squeezing of the pads around the shaft and the centering force which is generated thanks to the vibrations of the shaft are highly non-linear effects, which require an advanced non-linear bearing model in combination with a transient calculation of the rotordynamics.

Due to the rotation of the pump shaft a hydrodynamic pressure builds up in the lubricant on the front side of the pad. A portion of this lubricant is leaked through the channel in the pad to the backside of the pad where a uniform hydrostatic pressure is generated. The self-generated hydrostatic pressure of the lubricant lifts the pad. The pad is a kind of floating on a hydrostatical lubricant film or lubricant cushion. The lubricant film allows the pad to pivot, hence the name fluid pivot bearing. This lubricant film or cushion generates a damping when the lubricant gets squeezed by the vibration of the shaft and hence the vibration of the pads.

For many applications, in particular for subsea applications, both the radial and the axial bearings of the vertical pump are fully flooded. By the rotation of the pump shaft a hydrodynamic pressure will build up in the lubricant on each pad. As a result, the pads get squeezed against the pump shaft. This results in a reduction of the clearance of the radial bearing. Thus, even if the pump shaft were walking from pad to pad, the overall amplitude of the movement will be significantly smaller due to the reduced clearance in the radial bearing.

The squeezing of the pads against the pump shaft will also generate a centering force and will give a preferred position to the pump shaft within the radial bearing, namely in the center of the radial bearing. Actually, the pump shaft vibrations generate the counterforces, which push the pump shaft to the center of the radial bearing. Although the pump shaft does not have a preferred position in the radial bearing, the pump shaft will center itself within the radial bearing due to the vibrations of the pump shaft.

In sum, the fluid pivot bearing provides the combination of the following benefits to the vertical pump: The damping in the vertical pump and the entire system with the vertical pump is increased, a centering force acting on the pump shaft is created, the pump shaft is provided with a preferred position in the radial bearing, the available clearance in the radial bearing is reduced, which results in a considerable reduction in the amplitude of the pump shaft's vibrations, in particular for low energy movements, such as the sub-synchronous vibrations.

According to an embodiment of the vertical pump according to the invention, a plurality of radial bearings is provided, each of which is configured as a tilting pad journal bearing comprising a support ring and a plurality of pads for supporting the pump shaft by means of the lubricant, wherein each pad comprises a front side facing the pump shaft, a back side facing the support ring, and a channel for a fluid communication between the front side and the back side, and wherein, during operation, each pad is supported by the hydrostatic pressure of the lubricant squeezed between the back side of the pad and the support ring.

Thus, the vertical pump may comprise more than one radial bearing, which is configured for example as a fluid pivot bearing. Typically, a vertical pump comprises two radial bearings, namely un upper radial bearing and a lower radial bearing. In such embodiments it is possible that both the upper radial bearing and the lower radial bearing are configured as a fluid pivot bearing. In other embodiments either only the upper radial bearing or only the lower radial bearing is configured as a fluid pivot bearing, and the other radial bearing is configured as a conventional radial bearing.

According to a preferred configuration the at least one radial bearing comprises three pads. That is, the radial bearing which is configured as a fluid pivot bearing, has preferably three pads. Of course, it is also possible that the fluid pivot bearing has more than three pads, for example five pads. For embodiments having more than one radial bearing that is configured as a fluid pivot bearing, it is preferred that all fluid pivot bearings have the same number of pads.

In particular for subsea applications, e.g. in the oil and gas industry, it is preferred that each radial bearing is configured to be flooded with the lubricant during operation. The lubricant may be a barrier fluid, which is commonly used for preventing a leakage of the process fluid through the shaft seals into the bearings or the drive unit or the environment. In many embodiments the shaft seals are mechanical seals.

For reducing the axial thrust, which has to be carried by an axial bearing for the pump shaft, it is preferred that the vertical pump, comprises a balance drum, which is fixedly connected to the pump shaft between the impeller and one of the radial bearings, the balance drum defining a front side facing the impeller, and a back side, wherein a relief passage is provided between the balance drum and a stationary part configured to be stationary with respect to the pump housing, the relief passage extending from the front side to the back side, and wherein a balance line is provided and configured for the recirculation of the process fluid from the back side to a low pressure side of the vertical pump.

According to a preferred configuration the vertical pump has a plurality of impellers, wherein the plurality of impellers comprises at least a first stage impeller and a last stage impeller. Thus, the vertical pump is designed as a multistage pump.

When the vertical pump is designed as a multistage pump, the vertical multistage pump may be configured with an in-line arrangement of all impellers, i.e. all impellers are arranged in series with the suction side facing in the same direction for each impeller. It is also possible to configure the vertical multistage pump with a back-to-back arrangement of the impellers, i.e. the plurality of impellers comprises a first set of impellers and a second set of impellers wherein the first set of impellers and the second set of impellers are arranged in a back-to-back arrangement, so that an axial thrust generated by the first set of impellers is directed opposite to an axial thrust generated by the second set of impellers.

For a back-to-back arrangement of the impellers it is preferred that the vertical pump comprises a center bush, which is fixedly connected to the pump shaft between the first set of impellers and the second set of impellers, wherein a balancing passage is provided between the center bush and a second stationary part configured to be stationary with respect to the pump housing.

In particular for applications in the oil and gas industry it is a preferred design, that the vertical pump is configured as a multiphase pump for conveying a multiphase process fluid, for example a multiphase mixture of crude oil, natural gas, chemicals, seawater and sand.

When the vertical pump is a multiphase pump, the vertical pump is preferably configured for conveying multiphase process fluids having a gas volume fraction of 0% (pure liquid) to 100% (pure gas).

Particularly in view of subsea applications it is preferred that the vertical pump further comprises a drive unit arranged in the pump housing and configured for driving the rotor. The pump housing with the drive unit inside may then be configured as a pressure housing, which is able to withstand the large hydrostatic pressure at a subsea location, e.g. on the sea ground.

Preferably, the drive unit comprises a drive shaft for driving the pump shaft of the rotor, and an electric motor for rotating the drive shaft about the axial direction, wherein a coupling is provided for coupling the drive shaft to the pump shaft.

Furthermore, it is preferred that the drive unit is arranged on top of the pump shaft.

In view of a preferred application the vertical pump may be configured as a subsea pump.

In addition, it is preferred that the vertical pump is configured for installation on a sea ground.

Furthermore, according to the invention a method for retrofitting a vertical pump is proposed wherein a journal bearing of the vertical pump is replaced with a radial bearing, which is configured as a tilting pad journal bearing comprising a support ring and a plurality of pads for supporting the pump shaft by means of a lubricant, wherein each pad comprises a front side facing the pump shaft, a back side facing the support ring, and a channel for a fluid communication between the front side and the back side, wherein, during operation, each pad is supported by the hydrostatic pressure of the lubricant squeezed between the back side of the pad and the support ring.

Thus, according to said method a conventional journal bearing of a vertical pump is replaced e.g. with a fluid pivot bearing. It is a major advantage of the fluid pivot bearing, that it may be configured with at least essentially the same dimensions as a conventional journal bearing. Thus, for existing or operating vertical pumps having an issue with the amplitude of the pump shaft vibrations the conventional journal bearing or bearings may be easily replaced with a fluid pivot bearing.

Further advantageous measures and embodiments of the invention will become apparent from the dependent claims.

The invention will be explained in more detail hereinafter with reference to embodiments of the invention and with reference to the drawings. There are shown in a schematic representation:
- Fig. 1:: a schematic cross-sectional view of a first embodiment of a vertical pump according to the invention,
- Fig. 2:: a schematic cross-sectional view of a second embodiment of a multistage pump according to the invention,
- Fig. 3:: a schematic representation of an embodiment of the radial bearing in a cross-sectional view perpendicular to the pump shaft,
- Fig. 4:: a schematic representation of the embodiment in Fig. 3 in a cross-sectional view along to the pump shaft,
- Fig. 5:: a plan view of the back side of a pad, and
- Fig. 6:: a cross-sectional view of the pad along cutting line VI-VI in Fig. 5.

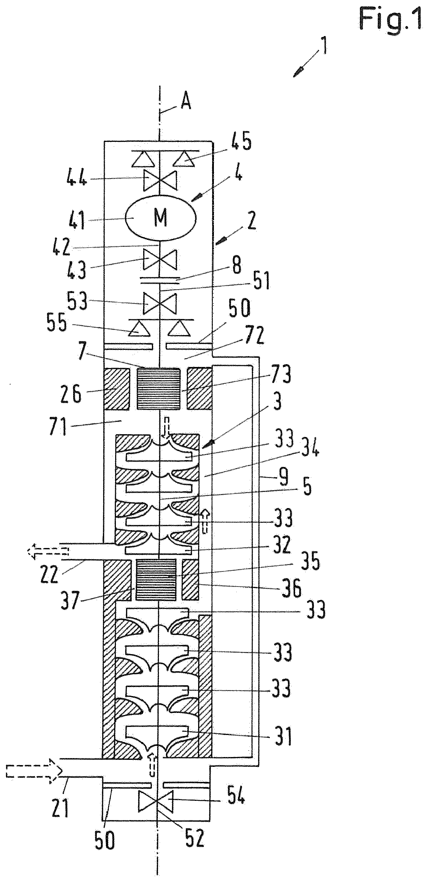

Fig. 1 shows a schematic cross-sectional view of an embodiment of a vertical pump according to the invention, which is designated in its entity with reference numeral 1. As commonly understood in the art, a vertical pump has a pump shaft 5 which extends, during operation, in the vertical direction, i.e. the direction of gravity. The vertical pump 1 is designed as a centrifugal pump for conveying a process fluid. The vertical pump 1 has a pump housing 2, in which a rotor 3 is arranged. The rotor 3 is configured for rotating about an axial direction A. In the vertical pump 1 the axial direction A coincides with the direction of gravity. For rotating the rotor 3 a drive unit 4 is provided. In the embodiment shown in Fig. 1 the drive unit 4 is also arranged inside the pump housing 2. It goes without saying that in other embodiments of the vertical pump the drive unit is arranged outside the pump housing 2, e.g. in a separate motor housing.

In the embodiment shown in Fig. 1 both the rotor 3 and the drive unit 4 are arranged within the pump housing 2. The pump housing 2 is designed as a pressure housing, which is configured to withstand the pressure generated by the vertical pump 1 as well as the pressure exerted on the pump 1 by the environment. The pump housing 2 may comprise several housing parts, which are connected to each other to form the pump housing 2 surrounding the rotor 3 and the drive unit 4. It is also possible that a rotor housing and a separate motor housing are both inserted in the pump housing 2. In the embodiment shown in Fig. 1 the pump housing 2 is configured as a hermetically sealed pressure housing preventing any leakage to the external environment.

In the following description reference is made by way of example to the important application that the vertical pump 1 is designed and adapted for being used as a subsea multiphase pump 1 in the oil and gas industry. Thus, the vertical pump 1 is configured for conveying a multiphase process fluid, for example a process fluid comprising liquid and gaseous components. In particular, the vertical pump 1 is configured for installation on the sea ground, i.e. for use beneath the water-surface, in particular down to a depth of 500 m, down to 1000 m or even down to more than 2000 m beneath the water-surface of the sea. In such applications the multiphase process fluid is typically a mixture containing hydrocarbons that has to be pumped from an oilfield for example to a processing unit beneath or on the water-surface or ashore. The multiphase mixture constituting the multiphase process fluid to be conveyed can include a liquid phase, a gaseous phase and a solid phase, wherein the liquid phase can include crude oil, seawater and chemicals, the gas phase can include methane, natural gas or the like and the solid phase can include sand, sludge and smaller stones without the vertical pump 1 being damaged on the pumping of the multiphase mixture.

It has to be understood that the invention is not restricted to this specific example but is related to vertical pumps in general. The vertical pump 1 may also be configured for top side applications, e.g. for an installation ashore or on an oil platform, in particular on an unmanned platform. In addition, the vertical pump 1 according to the invention may also be used for applications outside the oil and gas industry.

The pump housing 2 of the vertical pump 1 comprises a pump inlet 21, through which the multiphase process fluid enters the pump 1, and a pump outlet 22 for discharging the process fluid with an increased pressure as compared to the pressure of the process fluid at the pump inlet 21. Typically, the pump outlet 22 is connected to a pipe (not shown) for delivering the pressurized process fluid to another location. The pressure of the process fluid at the pump outlet 22 is referred to as 'high pressure' whereas the pressure of the process fluid at the pump inlet 21 is referred to as 'low pressure'. A typical value for the difference between the high pressure and the low pressure is for example 100 to 200 bar (10 - 20 MPa).

The rotor 3 of the vertical pump 1 comprises the pump shaft 5 extending from a drive end 51 to a non-drive end 52 of the pump shaft 5. The pump shaft 5 is configured for rotating about the axial direction A, which is defined by the longitudinal axis of the pump shaft 5.

The rotor 3 further comprises a plurality of impellers with a first stage impeller 31, a last stage impeller 32 and optionally a number of intermediate stage impellers 33. In the first embodiment the vertical pump 1 is an eight stage pump having the first stage impeller 31, the last stage impeller 32 and six intermediate stage impellers 33, which are all arranged one after another on the pump shaft 5. Of course, the number of eight stages is only exemplary. In other embodiments the vertical pump 1 may comprise more than eight stages, e.g. ten or twelve stages, or less than eight stages for example four or two stages, or an odd number of stages, e.g. three stages.

The first stage impeller 31 is the first impeller when viewed in the direction of the streaming fluid, i.e. the first stage impeller 31 is located next to the pump inlet 21 at the low pressure side. The last stage impeller 32 is the last impeller when viewed in the direction of the streaming fluid, i.e. the last stage impeller 32 is located next to the pump outlet 22 at the high pressure side of the pump 1.

Each impeller 31, 32, 33 is fixedly mounted on the pump shaft 5 in a torque proof manner. The plurality of impellers 31, 32, 33 is arranged one after another and configured for increasing the pressure of the fluid from the low pressure to the high pressure.

The drive unit 4 is configured to exert a torque on the drive end 51 of the pump shaft 5 for driving the rotation of the pump shaft 5 and the impellers 31, 32, 33 about the axial direction A.

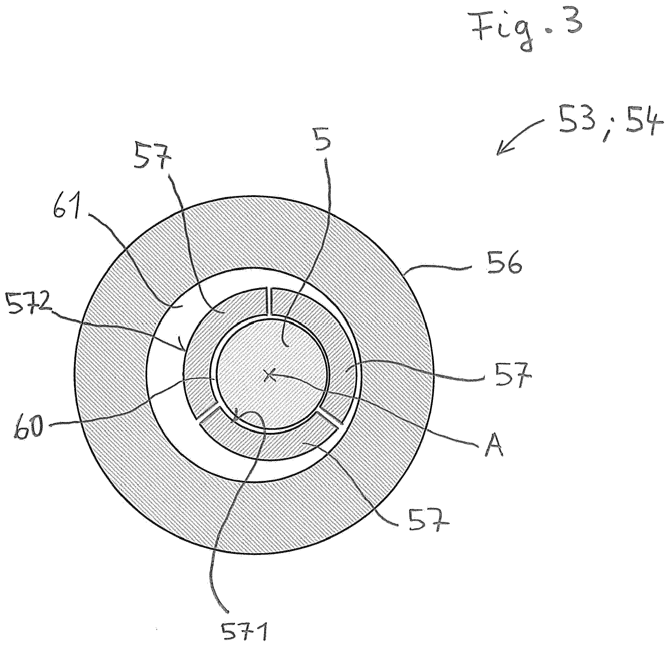

A direction perpendicular to the axial direction A is referred to as radial direction. The term 'axial' or 'axially' is used with the common meaning 'in axial direction' or 'with respect to the axial direction'. In an analogous manner the term 'radial' or 'radially' is used with the common meaning 'in radial direction' or 'with respect to the radial direction'. Hereinafter relative terms regarding the location like "above" or "below" or "upper" or "lower" or "top" or "bottom" refer to the usual operating position of the pump 1. Fig. land Fig. 3 show the vertical pump 1 in the usual operating position.

Referring to this usual orientation during operation and as shown in Fig. 1 the drive unit 4 is located above the rotor 3. However, in other embodiments the rotor 3 may be located on top of the drive unit 4.

As can be seen in Fig. 1 the plurality of impellers 31, 32, 33 comprises a first set of impellers 31, 33 and a second set of impellers 32, 33, wherein the first set of impellers 31, 33 and the second set of impellers 32, 33 are arranged in a back-to-back arrangement. The first set of impellers 31, 33 comprises the first stage impeller 31 and the three intermediate impellers 33 of the next three stages and the second set of impellers 32, 33 comprises the last stage impeller 32 and the three intermediate impellers 33 of the three preceding stages. In other embodiments the first set of impellers may comprise a different number of impellers than the second set of impellers.

In a back-to-back arrangement, as it is shown in Fig. 1, the first set of impellers 31, 33 and the second set of impellers 32, 33 are arranged such that the axial thrust generated by the action of the rotating first set of impellers 31, 33 is directed in the opposite direction as the axial thrust generated by the action of the rotating second set of impellers 32, 33. As indicated in Fig. 1 by the dashed arrows without reference numeral, the fluid enters the vertical pump 1 through the pump inlet 21 located at the lower end of the rotor 3, passes the stages one (first stage), two, three and four, is then guided through a crossover line 34 to the suction side of the fifth stage at the upper end of the rotor 3, passes the stages five, six, seven and eight (last stage), and is then discharged through the pump outlet 22, which is arranged between the upper end and the lower end of the rotor 3.

For many applications the back-to-back arrangement is preferred because the axial thrust acting on the pump shaft 5, which is generated by the first set of impellers 31, 33 counteracts the axial thrust, which is generated by the second set of impellers 32, 33. Thus, said two axial thrusts compensate each other at least partially.

For further reducing the overall axial thrust acting on the pump shaft 5 the pump 1 may further comprise a balance drum 7 and/or a center bush 35.

The pump 1 further comprises a plurality of bearings. A first radial bearing 53, a second radial bearing 54 and an axial bearing 55 are provided for supporting the pump shaft 5. The first radial bearing 53, which is the upper one, is arranged adjacent to the drive end 51 of the pump shaft 5 between the impellers of the rotor 3 on the one side and the drive unit 4 on the other side. The second radial bearing 54, which is the lower one, is arranged between the impellers of the rotor 3 on the one side and the non-drive end 52 of the pump shaft 5 on the other side, or at the non-drive end 52. The axial bearing 55 is arranged between the impellers of the rotor 3 on the one side and the first radial bearing 53 on the other side. The pump bearings 53, 54, 55 are configured to support the pump shaft 5 both in axial and radial direction. The radial bearing 53 and 54 are supporting the pump shaft 5 with respect to the radial direction, and the axial bearing 55 is supporting the pump shaft 5 with respect to the axial direction A, i.e. the vertical direction. The first radial bearing 53 and the axial bearing 55 are arranged such that the first radial bearing 53 is closer to the drive unit 4 and the axial bearing 55 is facing the impellers 33 of the rotor 3. Of course, it is also possible, to exchange the position of the first radial bearing 53 and the axial bearing 55, i.e. to arrange the first radial bearing 53 between the axial bearing 55 and the impellers 33 of the rotor 3, so that the axial bearing 55 is closer to the drive unit 4.

A radial bearing, such as the first or the second radial bearing 53 or 54 is also referred to as a "journal bearing" and an axial bearing, such as the axial bearing 55, is also referred to as an "thrust bearing".

The second radial bearing 54 is supporting the pump shaft 5 in radial direction. In the embodiment shown in Fig. 1, there is no axial bearing provided at the non-drive end 52 of the pump shaft 5. Of course, in other embodiments it is also possible that an axial bearing for the pump shaft 5 is provided at the non-drive end 52. In embodiments, where an axial bearing is provided at the non-drive end 52, a second axial bearing may be provided at the drive end 51 or the drive end 51 may be configured without an axial bearing.

Preferably the radial bearings 53 and 54 as well as the axial bearing 55 are configured as hydrodynamic bearings, and even more preferred as tilting pad bearings 53, 54 and 55, respectively. The first radial bearing 53 and the second radial bearing 54 are each configured as a radial tilting pad journal bearing. This will be explained in more detail hereinafter.

Preferably, the vertical pump 1 comprises at least one balancing device for at least partially balancing the axial thrust that is generated by the impellers 31, 32, 33 during operation of the pump 1. The balancing device may comprise the balance drum 7 (also referred to as throttle bush) and/or a center bush 35. The first embodiment of the vertical pump 1 comprises the balance drum 7 and the center bush 35 for at least partially balancing the axial thrust that is generated by the impellers 31, 32, 33.

The balance drum 7 is fixedly connected to the pump shaft 5 in a torque proof manner. The balance drum 7 is arranged above the impellers 33 of the rotor 3, namely between the impellers 33 of the rotor 3 and the drive end 51 of the pump shaft 5. The balance drum 7 defines a front side 71 and a back side 72. The front side 71 is the side facing the impellers 33 of the rotor 3. In the first embodiment the front side 71 is facing the intermediate stage impeller 33 of the fifth stage. The back side 72 is the side facing the axial bearing 55 and the drive unit 4. The balance drum 7 is surrounded by a stationary part 26, so that a relief passage 73 is formed between the radially outer surface of the balance drum 7 and the stationary part 26. The stationary part 26 is configured to be stationary with respect to the pump housing 2. The relief passage 73 forms an annular gap between the outer surface of the balance drum 7 and the stationary part 26 and extends from the front side 71 to the back side 72.

A balance line 9 is provided for recirculating the process fluid from the back side 72 of the balance drum 7 to the low pressure side at the pump inlet 21. In particular, the balance line 9 connects the back side 72 with the low pressure side of the pump 1, where the low pressure, i.e. the pressure at the pump inlet 21 prevails. Thus, a part of the pressurized fluid passes from the front side 71 through the relief passage 73 to the back side 72, enters the balance line 9 and is recirculated to the low pressure side of the pump 1. The balance line 9 constitutes a flow connection between the back side 72 and the low pressure side at the pump inlet 21. The balance line 9 may be arranged - as shown in Fig. 1 - outside the pump housing 2. In other embodiments the balance line 9 may be designed as internal line completely extending within the pump housing 2.

Due to the balance line 9 the pressure prevailing at the back side 72 is essentially the same - apart from a minor pressure drop caused by the balance line 9 - as the low pressure prevailing at the pump inlet 21.

The axial surface of the balance drum 7 facing the front side 71 is exposed to an intermediate pressure between the low pressure and the high pressure. In the first embodiment shown in Fig. 1 said intermediate pressure is the suction pressure of the fifth stage prevailing at the outlet of the crossover line 34 during operation of the pump 1. Of course, due to smaller pressure losses the pressure prevailing at the axial surface of the balance drum 7 facing the front side 71 may be somewhat smaller than said intermediate pressure. However, the considerably larger pressure drop takes place over the balance drum 7. At the back side 72 it is essentially the low pressure that prevails during operation of the Thus, the pressure drop over the balance drum 7 is essentially the difference between the intermediate pressure and the low pressure.

The pressure drop over the balance drum 7 results in a force that is directed upwardly in the axial direction A and therewith counteracts the downwardly directed axial thrust generated by the first set of impellers 31, 33, namely the first stage impeller 31 and the intermediate impellers 33 of the second, third and fourth stage.

As a further balancing device for reducing the overall axial thrust acting on the pump shaft 5, a center bush 35 is arranged between the first set of impellers 31, 33 and the second set of impellers 33, 32. The center bush 35 is fixedly connected to the pump shaft 5 in a torque proof manner and rotates with the pump shaft 5. The center bush 35 is arranged on the pump shaft 5 between the last stage impeller 32, which is the last impeller of the second set of impellers, and the intermediate impeller 33 of the fourth stage, which is the last impeller of the first set of impellers, when viewed in the direction of increasing pressure. The center bush 35 is surrounded by a second stationary part 36 being stationary with respect to the pump housing 2. An annular balancing passage 37 is formed between the outer surface of the center bush 35 and the second stationary part 36.

The function of the center bush 35 and the balancing passage 37 is in principle the same as the function of the balance drum 7 and the relief passage 73. At the axial surface of the center bush 35 facing the last stage impeller 32 the high pressure prevails, and at the other axial surface facing the intermediate impeller 33 of the fourth stage a lower pressure prevails, which is essentially the same as the intermediate pressure when neglecting the small pressure losses caused by the crossover line 34. Therefore, the fluid may pass from the last stage impeller 32 through the balancing passage 37 to the intermediate impeller 33 of the fourth stage.

The pressure drop over the center bush 35 essentially equals the difference between the high pressure and the intermediate pressure. Said pressure drop over the center bush results in a force that is directed downwardly in the axial direction A and therewith counteracts the upwardly directed axial thrust generated by the second set of impellers 33, 32, namely the intermediate impellers 33 of the fifth, sixth and seventh stage and the last stage impeller 32.

The drive unit 4 comprises an electric motor 41 and a drive shaft 42 extending in the axial direction A. For supporting the drive shaft 42 a first radial drive bearing 43, a second radial drive bearing 44 and an axial drive bearing 45 are provided, wherein the second radial drive bearing 44 and the axial drive bearing 45 are arranged above the electric motor 41 with respect to the axial direction A, and the first radial drive bearing 43 is arranged below the electric motor 41. The electric motor 41, which is arranged between the first and the second radial drive bearing 43, 44, is configured for rotating the drive shaft 42 about the axial direction A. The drive shaft 42 is connected to the drive end 51 of the pump shaft 5 by means of a coupling 8 for transferring a torque to the pump shaft 5.

The drive bearings 43, 44 and 45 are configured to support the drive shaft 42 both in radial direction and in the axial direction A. The first and the second radial drive bearing 43, 44 support the drive shaft 42 with respect to the radial direction, and the axial drive bearing 45 supports the drive shaft 42 with respect to the axial direction A. The second radial drive bearing 44 and the axial drive bearing 45 are arranged such that the second radial drive bearing 44 is arranged between the axial drive bearing 45 and the electric motor 41.

Of course, it is also possible, to exchange the position of the second radial drive bearing 44 and the axial drive bearing 45.

The second radial drive bearing 44 and the axial drive bearing 45 may be configured as separate bearings, but it is also possible that the second radial drive bearing 44 and the axial drive bearing 45 are configured as a single combined radial and axial bearing supporting the drive shaft 42 both in radial and in axial direction A.

The first radial drive bearing 43 is arranged below the electric motor 41 and supports the drive shaft 42 in radial direction. In the embodiment shown in Fig. 1, there is no axial bearing arranged below the electric motor 41. Of course, it is also possible that an axial drive bearing for the drive shaft 42 is - alternatively or additionally - arranged below the electric motor 41, i.e. between the electric motor 41 and the coupling 8.

The electric motor 41 of the drive unit 4 may be configured as a cable wound motor. In a cable wound motor the individual wires of the motor stator (not shown), which form the coils for generating the electromagnetic field(s) for driving the motor rotor (not shown), are each insulated, so that the motor stator may be flooded for example with a barrier fluid. Alternatively, the electric motor 41 may be configured as a canned motor. When the electric drive 41 is configured as a canned motor, the annular gap between the motor rotor and the motor stator of the electric motor 41 is radially outwardly delimited by a can (not shown) that seals the motor stator hermetically with respect to the motor rotor and the annular gap. Thus, any fluid flowing through the gap between the motor rotor and the motor stator cannot enter the motor stator. When the electric motor 41 is designed as a canned motor a dielectric cooling fluid may be circulated through the hermetically sealed motor stator for cooling the motor stator.

Preferably, the electric motor 41 is configured as a permanent magnet motor or as an induction motor. To supply the electric motor 41 with energy, a power penetrator (not shown) is provided at the common housing 2 for receiving a power cable (not shown) that supplies the electric motor 41 with power.

The electric motor 41 may be designed to operate with a variable frequency drive (VFD), in which the speed of the motor 41, i.e. the frequency of the rotation, is adjustable by varying the frequency and/or the voltage supplied to the electric motor 41. However, it is also possible that the electric motor 41 is configured differently, for example as a single speed or single frequency drive.

The drive shaft 42 is connected to the drive end 51 of the pump shaft 5 by means of the coupling 8 for transferring a torque to the pump shaft 5. Preferably the coupling 8 is configured as a flexible coupling 8, which connects the drive shaft 42 to the pump shaft 5 in a torque proof manner but allows for a relative lateral (radial) and/or axial movement between the drive shaft 42 and the pump shaft 5. Thus, the flexible coupling 8 transfers the torque but no or nearly no lateral vibrations. Preferably, the flexible coupling 8 is configured as a mechanical coupling 8. In other embodiments the flexible coupling may be designed as a magnetic coupling, a hydrodynamic coupling or any other coupling that is suited to transfer a torque from the drive shaft 42 to the pump shaft 5.

The vertical pump 1 further comprises two sealing units 50 for sealing the pump shaft 5 against a leakage of the fluid along the pump shaft 5. By the sealing units 50 the process fluid is prevented from entering the drive unit 4 as well as the pump bearings 53, 54, 55. One of the sealing units 50 is arranged between the balance drum 7 and the axial bearing 55 and the other sealing unit 50 is arranged between the first stage impeller 31 and the second radial bearing 54. Preferably each sealing unit 50 comprises a mechanical seal. Mechanical seals are well-known in the art in many different embodiments and therefore require no detailed explanation. In principle, a mechanical seal is a seal for a rotating shaft and comprises a rotor fixed to the pump shaft 5 and rotating with the pump shaft 5, as well as a stationary stator fixed with respect to the common housing 2. During operation the rotor and the stator are sliding along each other - usually with a liquid there between - for providing a sealing action to prevent the fluid from escaping to the environment or entering the drive unit 4 of the pump 1 or the pump bearings.

For the lubrication and the cooling of the sealing units 50 and the pump bearings 53, 54, 55 as well as for the cooling of the drive unit 4 a lubricant is provided, which also acts as barrier fluid of a barrier fluid system. Barrier fluid systems as such are well-known in the art since many years and therefore do not require a detailed explanation. A barrier fluid system comprises a reservoir for a barrier fluid, i.e. the lubricant as well as a circuit through which the barrier fluid is moved. The circuit is designed e.g. such that the lubricant passes through the drive unit 4, the pump bearings 53, 54, 55 and the sealing units 50. Thus, the pump bearings 53, 54, 55 are fully flooded with the lubricant. The barrier fluid system may also comprise a heat exchanger for cooling the barrier fluid as well as a pressure control device for controlling the pressure of the barrier fluid in the circuit. The pressure of the barrier fluid in the circuit is controlled such that the pressure of the barrier fluid is at least as high as but preferably higher than a reference pressure of the process fluid. According to a preferred configuration, the pressure of the barrier fluid in the circuit is higher than the low pressure at the pump inlet 21.

By this measure there is always a leakage flow of barrier fluid/lubricant through the sealing units 50 into the pump unit 3. Therefore, any leakage flow of the fluid from the pump unit 3 through the sealing units 50 into the drive unit 4 or the pump bearings 53, 54, 55 is reliably prevented. The amount of barrier fluid, that is lost by the leakage into the pump unit 3 is replaced from the reservoir for the barrier fluid.

In other embodiments (not shown) a further balance drum may be arranged below the first stage impeller 31 next to non-drive end 52 of the pump shaft 5, more precisely between the first stage impeller and the second radial bearing 54. In still other embodiments a balance drum is provided only at the lower end of the pump 1, between the first stage impeller and the second radial bearing 54 at the non-drive end 52 of the pump shaft 5 and no balance drum is provided above the impellers 33 near the drive end 51 of the pump shaft 5. In all these embodiments the center bush 35, the second stationary part 36 and the balancing passage 37 in between are optional features, i.e. the vertical pump 1 may be designed with or without these features.

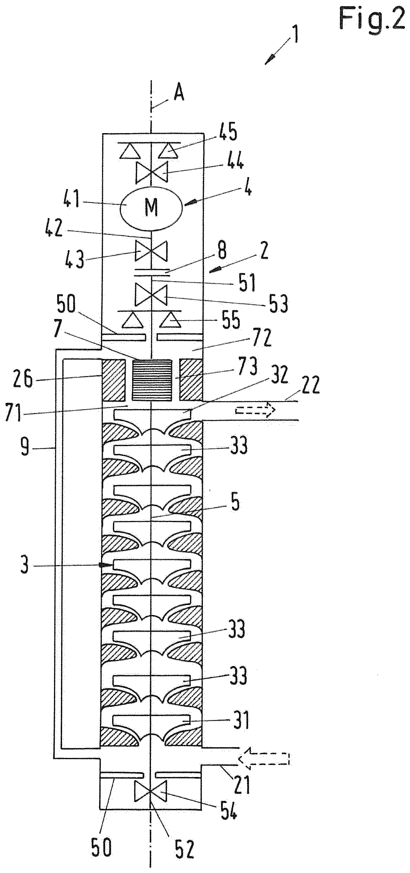

Fig. 2 shows a schematic cross-sectional view of a second embodiment of a vertical pump 1 according to the invention.

In the following description of the second embodiment of the vertical pump 1 only the differences to the first embodiment are explained in more detail. The explanations with respect to the first embodiment and variants thereof are also valid in the same way or in analogously the same way for the second embodiment. Same reference numerals designate the same features that have been explained with reference to the first embodiment or functionally equivalent features.

Compared to the first embodiment, it is the main difference, that the second embodiment of the vertical pump 1 is designed with an in-line arrangement of all impellers 31, 32, 33. In an inline arrangement all impellers 31, 32, 33 are configured such that the axial thrusts generated by the individual rotating impellers 31, 32, 33 are all directed in the same direction, namely downwards in the axial direction A in Fig. 2. The plurality of impellers 31, 32, 33 in Fig. 2 may be considered as consisting of a first set of impellers 31, 33 comprising the first stage impeller 31 and some of the intermediate stage impellers 33 and a second set of impellers 33, 32 comprising the remaining intermediate stage impellers 33 and the last stage impeller 32. Then, the axial thrust generated by the first set of impellers 31, 33 is directed in the same direction as the axial thrust generated by the second set of impellers 33, 32. In addition, the flow of the process fluid from the pump inlet 21 (low pressure) towards the pump outlet 22 (high pressure) is always directed in the same direction, namely in upward direction, and does not change as in the back-to-back arrangement (Fig. 1).

Therefore, the second embodiment does not have the crossover line 34. In addition, the pump outlet 22 is arranged at the upper end next to the last stage impeller 32 embodiment.

Furthermore, the second embodiment is designed as a nine stage vertical pump 1, having the first stage impeller 31, the last stage impeller 32 and seven intermediate stage impellers 33.

The balance drum 7 is arranged at the upper end adjacent to the last stage impeller 32, namely between the last stage impeller 32 and the drive end 51 of the pump shaft 5. The front side 71 of the balance drum 7 is in fluid communication with the pump outlet 22. The balance line 9 is provided for recirculating the fluid from the back side 72 of the balance drum 7 to the low pressure side at the pump inlet 21. Due to the balance line 9 the pressure prevailing at the back side 72 is essentially the same - apart from a minor pressure drop caused by the balance line 9 - as the low pressure prevailing at the pump inlet 21.

The axial surface of the balance drum 7 facing the front side 71 is exposed to the high pressure prevailing at the pump outlet 22. Thus, the pressure drop over the balance drum 7 essentially equals the pressure difference between the high pressure at the pump outlet 22 and the low pressure at the pump inlet 21.

Of course, due to smaller pressure losses the pressure prevailing at the axial surface of the balance drum 7 facing the front side 71 may be somewhat smaller than the high pressure. However, the considerably larger pressure drop takes place over the balance drum 7.

The pressure drop over the balance drum 7 results in a force that is directed upwardly in the axial direction A and therewith counteracts the downwardly directed axial thrust generated by the plurality of impellers 31, 32, 33.

The second embodiment does not comprise the center bush 35, the second stationary part 36 and the balancing passage 37. However, in other embodiments with an in-line arrangement of the impellers there may be provided a center bush between two adjacent impellers.

Both for an in-line arrangement (Fig. 2) and for a back-to-back arrangement (Fig. 1) the number of individual impellers 31, 32, 33 forming the first set of impellers 31, 33 and the number of individual impellers forming the second set of impellers 33, 32 may be different or may be the same. It depends on the respective application, whether the first set and the second set have the same number of impellers or whether the first set of impellers has a different number of impellers than the second set of impellers.

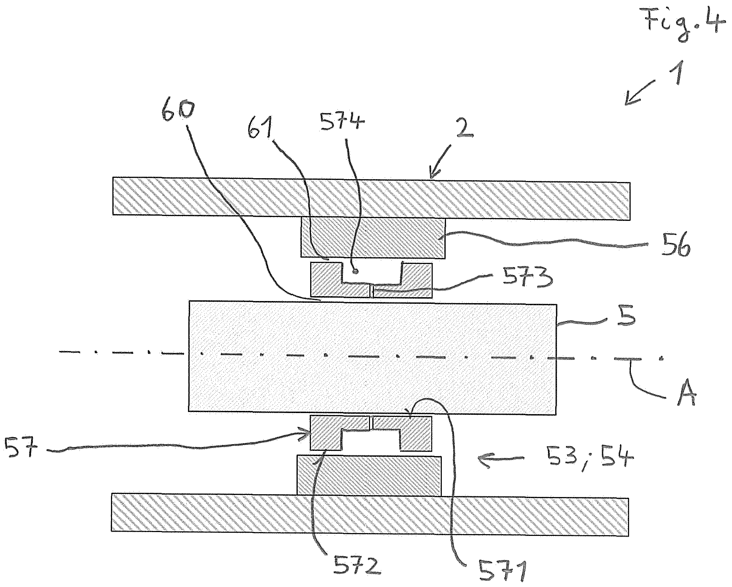

Referring particularly to Fig. 3 - Fig. 6 an embodiment of a radial bearing 53, 54 is explained which is suited for the vertical pump 1 according to the invention. Fig. 3 shows the embodiment of the radial bearing 53, 54 in a schematic representation in a cross-sectional view perpendicular to the pump shaft 5. Fig. 4 shows a representation of this embodiment of the radial bearing 53, 54 in a cross-sectional view along the pump shaft. 5.

Without loss of generality reference is made to the example that only the first radial bearing 53 is configured according to the embodiment of the radial bearing shown in Fig. 3. It goes without saying that it is also possible, that only the second radial bearing 54 is configured according to the embodiment of the radial bearing shown in Fig. 3. Furthermore, it is possible that both the first radial bearing 53 and the second radial bearing 54 are configured according to the embodiment of the radial bearing shown in Fig. 3.

The radial bearing 53 shown in Fig. 3 is configured as a specific type of tilting pad journal bearing, which is also referred to as fluid pivot bearing. The radial bearing 53 comprises a support ring 56 arranged about the pump shaft 5 as well as a plurality of pads 57 for supporting the pump shaft 5 by means of the lubricant. The pads 57 are arranged between the support ring 56 and the pump shaft 5, such that the entierty of the pads 57 surrounds the pump shaft 5. In the illustrated embodiment the radial bearing 53 comprises three pads 57 which are arranged adjacent to each other with respect to the circumferential direction of the pump shaft. In other embodiments another number of pads 57 may be provided for example 5 pads.

Each pad 57 comprises a front side 571 facing the pump shaft 5, a back side 572 facing the support ring 56, and a channel 573 (see Fig. 4, not shown in Fig. 3) for a fluid communication between the front side 571 and the back side 572. Each pad 57 has a generally arcuate shape and may be configured as a spherical pad 57 having a spherical back side 572 or as a cylindrical pad 57 having a back side 572 which has the shape of a cylinder segment.

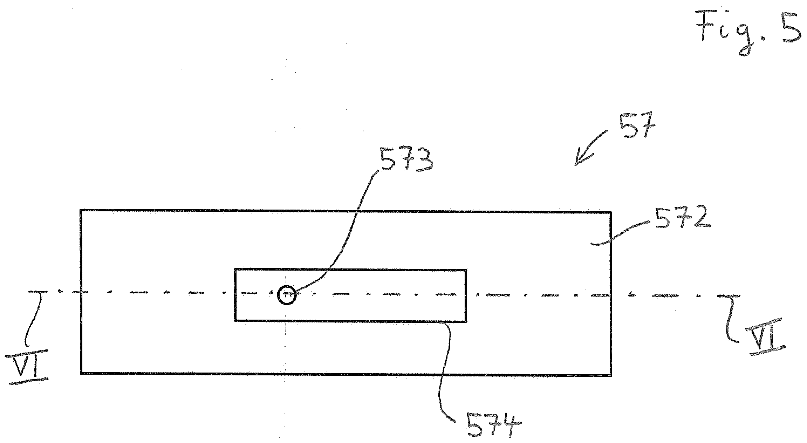

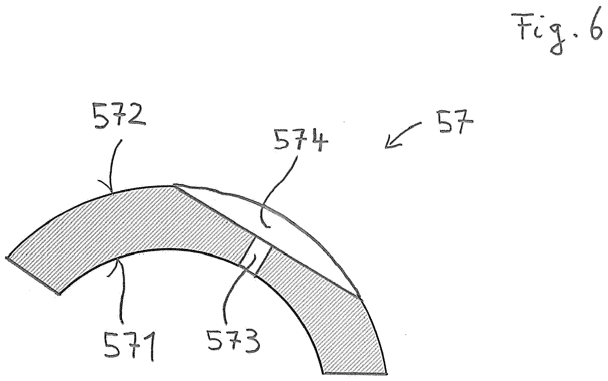

Fig. 5 shows a plan view of the back side 572 of the pad 57 and Fig. 6 shows a cross-sectional view of the pad along the cutting line VI-VI in Fig. 5. As it can be seen in Fig. 5 and Fig. 6 the back side 572 of the pad 57 is provided with an elongated circumferentially extending cavity 574 in which the channel 573 ends. The representation of the cavity 574 has been omitted in Fig. 3 and Fig. 4 for the sake of simplicity.

As already mentioned, the radial bearing 53 is fully flooded in the vertical pump 1 with the lubricant, which is the barrier fluid of the barrier fluid system. Thus, both the clearance 60 between the pump shaft 5 and the pads 57 is filled with the lubricant, and the chamber 61 between the back side 572 of the pads 57 and the support ring 56 is filled with lubricant. When the pump shaft 5 starts to rotate a hydrodynamically generated lubricant film is built up between the pump shaft 5 and the pads 57 as it is known from conventional hydrodynamic bearing.

A portion of the pressurized lubricant flows from the clearance 60, i.e. from the front side 571 of the pad 57 through the channel 573 to the back side 572 and fills the cavity 574 in the back side 573 of the pad 57. Thus, for each pad 57 a hydrostatic support is created by the lubricant between the back side 572 of the pad 57 and the support ring 56. Each pad 57 is only supported on the self-generated hydrostatic lubricant film or lubricant cushion. There is no direct mechanical support of the pads 57 against the support ring 56

When the pump shaft 5 is vibrating during operation of the pump 1, the pump shaft 5 tries to push away the pads 57. If the pads 57 are not exactly centered in the support ring 56, it will be easier to move the pads 57 in one direction than in the opposite direction. This is illustrated in Fig. 3. The radial distance between the back side 572 of the respective pad 57 and the support ring 56 is larger at the left side than at the right side in the representation in Fig. 3. Therefore, in Fig. 3, it is easier for the pump shaft to move to the left side than to the right side. Thus, the radial bearing 53 configured as a fluid pivot bearing is self-centering under the effect of vibrations. The pads 57 arranged around the pump shaft 5 will be squeezed towards the pump shaft 5 and thus limit the free movement of the pump shaft 5. The pads 57 will be moving with the vibrations of the shaft. In order for the pads 57 to be able to move, the hydrostatic fluid which is behind the pads 57 has to be squeezed away. This introduces forces which counteract the movement of the pads 57 and thus the vibrations of the pump shaft 5. Thanks to those counteracting forces, the overall damping in the system increases significantly. As a consequence, the amplitude of the vibrations of the pump shaft 5 is considerably reduced. In addition, by the self-centering of the pump shaft 5, the pump shaft 5 has now a preferred position within the clearance 60 of the radial bearing 53.

## Claims

1. A vertical pump for conveying a process fluid, comprising a pump housing (2) with a pump inlet (21) and a pump outlet (22), a rotor (3) arranged in the pump housing (2) and configured for rotating about an axial direction (A), and at least one radial bearing (53, 54) for supporting the rotor (3) with respect to a radial direction perpendicular to the axial direction (A), wherein the rotor (3) comprises a pump shaft (5) extending in the direction of gravity, and at least one impeller (31, 32, 33) fixedly mounted on the pump shaft (5) for conveying the process fluid from the pump inlet (21) to the pump outlet (22), and wherein the radial bearing (53, 54) is configured as a tilting pad journal bearing comprising a support ring (56) and a plurality of pads (57) for supporting the pump shaft (5) by means of a lubricant, **characterized in that** each pad (57) comprises a front side (571) facing the pump shaft (5), a back side (572) facing the support ring (56), and a channel (573) for a fluid communication between the front side (571) and the back side (572), wherein, during operation, each pad (57) is supported by the hydrostatic pressure of the lubricant squeezed between the back side (572) of the pad (57) and the support ring (56).

2. A vertical pump in accordance with claim 1, wherein a plurality of radial bearings (53, 54) is provided, each of which is configured as a tilting pad journal bearing comprising a support ring (56) and a plurality of pads (57) for supporting the pump shaft (5) by means of the lubricant, wherein each pad (57) comprises a front side (571) facing the pump shaft (5), a back side (572) facing the support ring (56), and a channel (573) for a fluid communication between the front side (571) and the back side (572), and wherein, during operation, each pad (57) is supported by the hydrostatic pressure of the lubricant squeezed between the back side (572) of the pad and the support ring (56).

3. A vertical pump in accordance with anyone of the preceding claims, wherein the at least one radial bearing (53; 54) comprises three pads (57).

4. A vertical pump in accordance with anyone of the preceding claims, wherein each radial bearing (53, 54) is configured to be flooded with the lubricant during operation.

5. A vertical pump in accordance with anyone of the preceding claims, comprising a balance drum (7), which is fixedly connected to the pump shaft (5) between the impeller (31, 32, 33) and one of the radial bearings (53, 54), the balance drum (7) defining a front side (71) facing the impeller, and a back side (72), wherein a relief passage (73) is provided between the balance drum (7) and a stationary part (26) configured to be stationary with respect to the pump housing (2), the relief passage (73) extending from the front side (71) to the back side (72), and wherein a balance line (9) is provided and configured for the recirculation of the process fluid from the back side (72) to a low pressure side of the vertical pump (1).

6. A vertical pump in accordance with anyone of the preceding claims, having a plurality of impellers (31, 32, 33), wherein the plurality of impellers (31, 32, 33) comprises at least a first stage impeller (31) and a last stage impeller (32).

7. A vertical pump in accordance with claim 6, wherein the plurality of impellers (31, 32, 33) comprises a first set of impellers (31, 33) and a second set of impellers (32, 33) wherein the first set of impellers (31, 33) and the second set of impellers (32, 33) are arranged in a back-to-back arrangement, so that an axial thrust generated by the first set of impellers (31, 33) is directed opposite to an axial thrust generated by the second set of impellers (32, 33).

8. A vertical pump in accordance with claim 7, comprising a center bush (35), which is fixedly connected to the pump shaft (5) between the first set of impellers(31, 33) and the second set of impellers (32, 33), wherein a balancing passage (37) is provided between the center bush (35) and a second stationary part (36) configured to be stationary with respect to the pump housing (2).

9. A vertical pump in accordance with anyone of the preceding claims configured as a multiphase pump for conveying a multiphase process fluid.

10. A vertical pump in accordance with claim 9 configured for conveying multiphase process fluids having a gas volume fraction of 0% to 100%.

11. A vertical pump in accordance with anyone of the preceding claims, further comprising a drive unit (4) arranged in the pump housing (2) and configured for driving the rotor (3).

12. A vertical pump in accordance with claim 11, wherein the drive unit (4) comprises a drive shaft (42) for driving the pump shaft (5) of the rotor, and an electric motor (41) for rotating the drive shaft (5) about the axial direction (A), and wherein a coupling (8) is provided for coupling the drive shaft (42) to the pump shaft (5).

13. A vertical pump in accordance with of claim 11 or claim 12, wherein the drive unit (4) is arranged on top of the pump shaft (5).

14. A vertical pump in accordance with anyone of the preceding claims configured as a subsea pump, and preferably configured for installation on a sea ground.

15. A method for retrofitting a vertical pump, **characterized in that** a journal bearing of the vertical pump is replaced with a radial bearing (53, 54), which is configured as a tilting pad journal bearing comprising a support ring (56) and a plurality of pads (57) for supporting the pump shaft (5) by means of a lubricant, wherein each pad (57) comprises a front side (571) facing the pump shaft (5), a back side (572) facing the support ring (56), and a channel (573) for a fluid communication between the front side (571) and the back side (572), wherein, during operation, each pad (57) is supported by the hydrostatic pressure of the lubricant squeezed between the back side (572) of the pad (57) and the support ring (56).
